# EUROPÄISCHE PATENTSCHRIFT

(11) **EP 1 963 601 B1**
(45) Veröffentlichungstag und Bekanntmachung des Hinweises auf die Patenterteilung: **15.07.2009**
(21) Anmeldenummer: 06846938.6
(22) Anmeldetag: 30.11.2006
(51) Int. Cl.: E05B 65/19, E05C 5/02, B62D 25/12, E05F 15/00

(54) **VERRIEGELUNGSEINHEIT**
LOCKING UNIT
UNITE DE VERROUILLAGE

(30) Priorität: 30.11.2005 DE 102005057425
(43) Veröffentlichungstag der Anmeldung: 03.09.2008
(73) Patentinhaber: Edscha AG, 42855 Remscheid (DE); Skoda Auto a.s., 293 60 Mlada Boleslav (CZ)
(72) Erfinder: MEYER, Eddy, 14712 Rathenow (DE); ERBEN, Karel, 29301 Mladá Boleslav II (CZ)
(74) Vertreter: Sparing, Rolf Klaus
(86) Internationale Anmeldenummer: PCT/DE2006/002120
(87) Internationale Veröffentlichungsnummer: WO 2007/062635

(56) Entgegenhaltungen:
- EP-A1- 0 095 988
- CA-A1- 2 274 069
- DE-A1- 3 337 202
- DE-A1- 19 808 374

## Beschreibung

Die Erfindung betrifft eine Verriegelungseinheit nach dem Oberbegriff des Anspruchs 1 für eine erste Klappe, eine zweite Klappe und einen Träger.

Aus der nach dem Prioritätsdatum der vorliegenden Anmeldung veröffentlichten DE 10 2006 013 735 A1 ist eine Verriegelungseinheit bekannt, bei der die erste Klappe als Heckklappe eines Kraftfahrzeugs, die zweite Klappe als Kofferraumklappe des Kraftfahrzeugs und der Träger als die Karosserie des Kraftfahrzeugs ausgebildet ist, wobei die Kofferraumklappe in einer ersten Stellung mit der Heckklappe zu einer Einheit koppelbar ist, so daß die Einheit aus der Heckklappe und der Kofferraumklappe um eine Heckklappenachse an der Karosserie schwenkbar angelenkt ist. In einer zweiten Stellung ist die Heckklappe an der Karosserie festgelegt, wobei die Kofferraumklappe an der Heckklappe um eine Kofferraumklappenachse schwenkbar ist, um nur den Kofferraum freizugeben. Die Kofferraumklappe ist über einen Schwenkarm drehbar angelenkt, wobei an dem Schwenkarm ein seitlich abstehender Zapfen angeordnet ist, wobei in der ersten Stellung der Zapfen von einem Verriegelungselement umgriffen ist. Das Verriegelungselement umfaßt einen Stift, einen länglichen Abschnitt in Form eines Hakens, der den Zapfen direkt umfaßt, und einen Mitnehmer in Form eines als Hebel wirkenden Führungselementes mit einer Längserstreckung in einer Richtung senkrecht zu der Drehachse. Zur Betätigung des Verriegelungselementes ist eine Betätigungseinheit vorgesehen, die eine U-förmige Aufnahme umfaßt, wobei zur Herstellung einer Wirkverbindung zwischen der Betätigungseinrichtung und dem Verriegelungselement das Führungselement in die U-förmige Aufnahme im wesentlichen formschlüssig eingreift. Die Betätigungseinrichtung umfaßt weiter einen Schwenkhaken mit einer Einbuchtung. Die U-förmige Aufnahme ist an einem ersten Antriebsmittel eines Doppelmechanismussesbefestigt, der Schwenkhaken an einem zweiten Antriebsmittel eines Doppelmechanismusses befestigt. Zur Betätigung des Verriegelungselementes greift dessen Führungselement in die U-förmige Aufnahme der Betätigungseinrichtung ein und diese dreht das Verriegelungselement in eine erste Drehrichtung, weiter wird der Schwenkhaken derart in eine zweite Drehrichtung gedreht, daß dieser den Stift des Verriegelungselementes übergreift. Nachteilig ist, daß die Betätigungseinrichtung insgesamt vielteilig und aufwendig aufgebaut ist, wobei weiter ungünstig ist, daß das der Betätigungseinrichtung zugeordnete Verriegelungselement ebenfalls aufwendig ausgestaltet sein muß. Ungünstig ist ferner, daß die Verriegelungseinheit störungsanfällig ist, insbesondere ist der Doppelmechanismus bei Ausgestaltung als Getriebe mit Zahnrädern im Fall einer Beschädigung oder des Eindringens eines Fremdkörpers schnell zu stören. Nachteilig ist auch, daß zwischen dem Verriegelungselement und dem Antrieb nur eine sehr indirekte Wirkverbindung über den Doppelmechanismus, die U-förmige Aufnahme und das Führungselement des Verriegelungselementes herstellbar ist, so daß eine leistungsstarke Antriebsvorrichtung erforderlich ist, ein vergleichsweise hoher Verschleiß auftritt und sich mit der Zeit Toleranzen zu einem unerwünschten Spiel summieren können. Nachteilig ist ebenfalls, daß zu einem Drehen des Verriegelungselementes ein hohes Drehmoment auf das Führungselement des Verriegelungselementes auszuüben ist, so daß hohe mechanische Belastungen auftreten. Bessere Drehmomentverhältnisse setzen eine bedeutende Längserstreckung des Führungselementes voraus, wodurch aber die Verriegelungseinheit einen großen Einbauraum beanspruchen würde. Ungünstig ist weiter, daß das Führungselement aufgrund des Stiftes einen Abstand von dem Verriegelungselement und der Schwenkhaken einen Abstand von dem Führungselement aufweist, so daß die Verriegelungseinheit insgesamt einen großen Platzbedarf insbesondere in einer durch den Stift definierten Richtung aufweist.

EP 0 718 134 B1 = DE 695 12 749 T2 zeigt ein Fahrzeug mit einer geteilten Heckklappe, die ein erstes mit einem Heckfenster versehenes Klappenteil und ein zweites, als Kofferraumdeckel ausgebildetes Klappenteil aufweist. Das erste Klappenteil ist um eine Schwenkachse schwenkbar an der Karrossie angelenkt. In einem der Schwenkachse abgekehrten Bereich ist an dem ersten Klappenteil eine über dessen Unterkante vorstehende Platte befestigt, an der über ein Viergelenk das zweite Klappenteil schwenkbar an dem ersten Klappenteil angelenkt ist. Das zweite Klappenteil ist konventionell an der Karosserie verriegelbar. Für den Fall, dass nur das zweite Klappenteil geöffnet werden soll, ist das erste Klappenteil über einen seitlich vorstehenden Zapfen in einem Haken der Karosserie festlegbar. Nachteilig ist hierbei, dass bei gemeinsam geöffneten Klappenteilen diese relativ zueinander nicht mehr festgelegt sind, so dass eine Verschwenkung der beiden Klappenteile relativ zueinander möglich ist. Ferner erfordert die Heckklappe zwei separate Gasdruckfedern als Unterstützung.

DE 196 15 540 A1 beschreibt eine verschwenkbare Heckklappe mit einem umlaufenden Rahmen, in dem ein Heckfenster und eine Ladeklappe aufgenommen und separat von der Heckklappe verschwenkbar gelagert sind. Hierbei sind zur Verriegelung des Heckfensters und der Ladeklappe mit dem Rahmen und relativ zueinander jeweils konventionelle Verriegelungsmittel vorgesehen.

DE 198 08 374 A1 beschreibt eine Verriegelung einer Klappe eines Kraftfahrzeugs, wie etwa den Frontdeckel eines Kraftfahrzeugs. Hierbei wird der Bügel eines Schlosses, der an der Karosserie angeordnet ist und dessen Achse im wesentlichen senkrecht auf der Schwenkachse der Klappe steht, von einer Verriegelungseinrichtung, die an der Klappe angeordnet ist, umgriffen, um die Klappe zu verriegeln. Die Verriegelungseinrichtung umfasst eine Drehfalle und eine Gabel, die beide auf einer gemeinsamen ersten Achse benachbart zueinander und schwenkbar gelagert sind und mit jeweils vorgesehenen Öffnungen den Bügel greifen. Ein erster Antrieb treibt die Bügelfalle über ein Zahnradgetriebe zur Drehung um die erste Achse an. Die Bügelfalle nimmt mit einem Versatz formschlüssig die Gabel in ihren Drehbewegung mit und verschwenkt in eine um ungefähr 180° verdrehte Parkstellung, in der die Teile der Verriegelungseinrichtung nicht mehr über den Rand der Klappe vorstehen. Bügelfalle und Gabel werden in ihrer verriegelten Stellung von jeweils einer zugeordneten Klinke gehalten, die beide auf einer gemeinsamen zweiten Achse gelagert sind und von einem zweiten Antrieb verschwenkbar sind.

DE 33 37 202 A1 beschreibt eine Verriegelung einer Klappe eines Kraftfahrzeugs, wie etwa den Frontdeckel eines Kraftfahrzeugs. Hierbei wird der Bügel eines Schlosses, der an der Klappe angeordnet ist, von einer an der Klappe angeordneten Verriegelungseinrichtung umgriffen, um die Klappe zu verriegeln. Die Verriegelungseinrichtung ist auf einer Achse schwenkbar, die von einer Feder in Richtung auf eine Freigabestellung vorgespannt ist. Die Verriegelungseinrichtung weist eine Hauptgleitbahn für die Führung des Bügels auf, deren unteres Ende die Schließposition definiert und deren oberes Ende in eine einen Anschlag definierende, wie ein Haken rückspringende Unterkante übergeht. Eine Oberkante des Hakens dient als Einführhilfe für den Bügel, so dass nach Überschreiten der Spitze des Hakens im Zuge der Schließbewegung die Feder die Verriegelungseinrichtung derart verschwenkt, dass der Bügel zur Anlage gegen die Hauptgleitbahn gelangt und durch weiteres Absenken die Verriegelungseinrichtung wieder gegen die Vorspannung der Feder verschwenkt, bis der Bügel die Schließposition erreicht. Durch eine der Hauptgleitbahn im wesentlichen gegenüberliegend ausgebildete sekundäre Gleitbahn wird sicher gestellt, dass beim Öffnen auch bei Versagen der Feder die Verriegelungseinrichtung derart verschwenkt wird, dass der Bügel unter den Anschlag gelangt. Eine auf der Seite der sekundären Gleitbahn ausgebildete, nach oben weisende Einführgleitbahn, die in die sekundären Gleitbahn ähnlich einem Keil übergeht, stellt sicher, dass die bei Versagen der Feder die nicht in Freigabestellung ausgerichtete Verriegelungseinrichtung so von dem auftreffenden Bügel verschwenkt wird, dass dieser wieder in den Bereich der Hauptgleitbahn gelangt.

Es ist die Aufgabe der Erfindung, eine Verriegelungseinrichtung anzugeben, die einfach gebaut und sicher im Betrieb ist.

Diese Aufgabe wird für die Verriegelungseinheit nach dem Oberbegriff des Anspruchs 1 erfindungsgemäß mit den kennzeichnenden Merkmalen des Anspruchs 1 gelöst.

Durch die Aufnahme des Mitnehmers in einem Langloch der Riegelscheibe, die dann relativ zu dem zuerst feststehenden Mitnehmer bewegt wird, ist sichergestellt, daß erst dann eine Kraft auf den Mitnehmer ausgeübt und damit eine Wirkverbindung zwischen der Betätigungseinrichtung und dem Verriegelungselement hergestellt wird, wenn der Mitnehmer an dem zweiten Ende des Langlochs angeordnet ist, wodurch ein versehentliches Austreten des Mitnehmers aus dem Langloch vermieden werden kann. Insbesondere wird die Kopplung zwischen der zweiten Klappe und der ersten Klappe erst dann aufgehoben, wenn durch den in dem Langloch sicher aufgenommene Mitnehmer eine Halterung der ersten Klappe an dem Träger vermittelt, so daß eine Freigabe der zweiten Klappe von der ersten Klappe und von dem Träger zur gleichen Zeit sicher und einfach zu verhindern ist.

Die Riegelscheibe ist einfach anzubringen, so daß die Verriegelungseinheit nur aus wenigen Einzelteilen besteht. Insbesondere ist vorteilhaft, daß die Riegelscheibe in einer einzigen Bewegung in einer ersten Bewegungsphase eine Festlegung der zweiten Klappe an dem Träger und in Fortsetzung der Bewegung in einer zweiten Bewegungsphase eine Freigabe der zweiten Klappe von der ersten Klappe auszuführen erlaubt. Ein derartiger Bewegungsablauf ist leicht anzusteuern, erfordert kein aufwendiges Getriebe und ist leicht zu kontrollieren.

Vorteilhaft ist weiter, daß in der Zwischenstellung der an dem zweiten Ende des Langlochs aufgenommene Mitnehmer des Verriegelungselementes eine im wesentlichen direkte Kopplung ohne weitere Zwischenstufen zwischen dem Antrieb der Riegelscheibe und dem zu betätigenden Verriegelungselement vermittelt.

Vorteilhaft ist weiter, daß die Verriegelungseinheit robust und kleinbauend ausgestaltet ist und insbesondere als vorgefertigte Einheit vorgesehen werden kann.

Vorzugsweise umfaßt die Verriegelungseinheit neben der Riegelscheibe eine an dem Träger befestigte Riegelplatte mit einer Bohrung, die von dem Mitnehmer zumindest abschnittsweise durchlaufen wird, so daß zusätzlich zu der durch das Langloch der Riegelscheibe ermöglichten Führung eine weitere Möglichkeit bietet, ein Ausbrechen des Mitnehmers aus einer vorbestimmten Trajektorie zu verhindern sowie weiter, daß in der zweiten Stellung der Antrieb ausgestellt werden kann und der Mitnehmer und durch diesen das Verriegelungselement mittels der Riegelplatte an dem Träger festlegbar sind. Der Verlauf der Bohrung der Riegelplatte ist dann durch die von dem geführten Mitnehmer beschriebene Trajektorie gegeben.

Vorzugsweise ist die Riegelscheibe an dem Träger um eine Riegelscheibenachse drehbar gelagert, so daß die Bewegung der Riegelscheibe im wesentlichen einer einfach ansteuerbaren Drehbewegung um einen maximalen Winkel entspricht.

Vorzugsweise weist das Verriegelungselement einen Hebel mit Hebelachse auf, wobei der Mitnehmer als Griff des Hebels ausgebildet ist, wodurch das Verriegelungselement einfach betätigbar ist.

Ist die Hebelachse des Hebels in einer Verlängerung der Riegelscheibenachse angeordnet, ist sichergestellt, daß der Hebel nur dann betätigbar ist, wenn an dem Griff des Hebels eine Kraft angreift und störende Einflüsse durch eine Reibung zwischen dem als Griff des Hebels ausgebildeten Mitnehmer und dem den Griff aufnehmenden Langloch der Riegelscheibe verringert werden. Das Langloch ist vorzugsweise derart gestaltet, beispielsweise durch eine Ausbildung einer Einführkante bzw. einer Führungsfläche an dem offenen Ende des Langlochs, daß in einem ersten Abschnitt der Drehung der Riegelscheibe die beiden Achsen erst zur Deckung gebracht werden, während der Bolzen in die Riegelplatte gegen den mechanischen Widerstand beispielsweise einer Kofferraumdichtung gezogen wird.

Vorzugsweise umfaßt die Riegelscheibe ein Sackloch, das an einem ersten Ende mit dem Langloch in Verbindung steht, wobei das Sackloch an einem zweiten, geschlossenen Ende ein weiteres, zusätzlich zu dem Mitnehmer vorgesehenes Führungsmittel des Verriegelungselementes aufnimmt, wobei eine definierte, reproduzierbare Ausrichtung des Verriegelungselementes relativ zu der Betätigungseinheit möglich wird. Ist insbesondere ein Griff als Mitnehmer vorgesehen, kann das weitere Führungsmittel als Führungsstift ausgebildet sein, der mit dem Mitnehmer fest verbunden ist.

Vorzugsweise weist das Langloch an dem ersten Ende eine Führungsfläche auf, mit der der Mitnehmer, der in der ersten Stellung an dem ersten Ende des Langlochs angeordnet ist, im weiteren Verlauf der Bewegung der Riegelscheibe zusammenwirkt. Insbesondere kann vorgesehen sein, die Führungsfläche derart auszugestalten, daß sich das Langloch in der Nähe des ersten Endes verjüngt, so daß der Mitnehmer in das Langloch sicher einfädeln kann und Toleranzen, die in der relativen Stellung zwischen dem Mitnehmer und dem ersten Ende des Langlochs auftreten können, ausgeglichen werden.

Alternativ zu einem drehbaren Verriegelungselement kann das Verriegelungselement längsverschieblich gelagert sein, beispielsweise als an der ersten Klappe aufgenommener Stößel, der in der ersten Stellung die erste Klappe an die zweite Klappe dadurch koppelt, daß der Stößel einen Abschnitt der zweiten Klappe durchsetzt. Dabei kann der Mitnehmer bei dem als Stößel ausgebildeten Verriegelungselement als von diesem seitlich abstehender Stift ausgebildet sein, der von dem Langloch aufgenommen und geführt wird.

Weitere Vorteile und Merkmale der Erfindung ergeben sich aus der nachfolgenden Beschreibung von bevorzugten Ausführungsbeispielen bzw. aus den abhängigen Ansprüchen.

Die Erfindung wird nachstehend unter Bezugnahme auf die anliegenden Zeichnungen anhand von zwei Ausführungsbeispielen einer erfindungsgemäßen Verriegelungseinheit näher beschrieben und erläutert.
- Fig. 1a: zeigt eine perspektivische Ansicht eines mit Getriebe ausge- rüstetenVerriegelungselementes einer Verriegelungseinheit;
- Fig. 1b: zeigt eine perspektivische Ansicht einer Betätigungseinrichtung für das Verriegelungselement aus Fig. 1a,
- Fig. 2: zeigt eine perspektivische Ansicht der Verriegelungseinheit mit der Betätigungseinrichtung aus Fig. 1b und dem Verriegelungselement aus Fig. 1a in einer Zwischenstellung;
- Fig. 3a: zeigt eine perspektivische Ansicht der Betätigungseinrichtung aus Fig. 2 in einer ersten Stellung,
- Fig. 3b: zeigt eine perspektivische Ansicht der Betätigungseinrichtung aus Fig. 2 in der Zwischenstellung,
- Fig. 3c: zeigt eine perspektivische Ansicht der Betätigungseinrichtung aus Fig. 2 in einer zweiten Stellung,
- Fig. 4: zeigt eine perspektivische Ansicht eines ersten Ausführungsbeispiels einer erfindungsgemäßen Verriegelungs- einheit in einer ersten Stellung,
- Fig. 4a: zeigt eine perspektivische Ansicht eines vergrößerten Ausschnitts des ersten Ausführungsbeispiels aus Fig. 4,
- Fig. 5: zeigt eine perspektivische Ansicht des ersten Ausführungs- beispiels aus Fig. 4 und 4a in einer Zwischenstellung,
- Fig. 5a: zeigt eine perspektivische Ansicht eines vergrößerten Ausschnitts des ersten Ausführungsbeispiels aus Fig. 5,
- Fig. 6: zeigt eine perspektivische Ansicht des ersten Ausführungs- beispiels aus Fig. 4 bis 5a in einer zweiten Stellung,
- Fig. 6a: zeigt eine perspektivische Ansicht eines vergrößerten Ausschnitts des ersten Ausführungsbeispiels aus Fig. 6,
- Fig. 7: zeigt eine perspektivische Ansicht eines zweiten Ausführungs- beispiels einer erfindungsgemäßen Verriegelungseinheit in einer ersten Stellung,
- Fig. 8: zeigt eine perspektivische Ansicht des zweiten Ausführungs- beispiels aus Fig. 7 in einer einer Zwischenstellung angenäherten Stellung, und
- Fig. 9: zeigt eine perspektivische Ansicht des zweiten Ausführungs- beispiels aus Fig. 7 und 8 in einer zweiten Stellung.

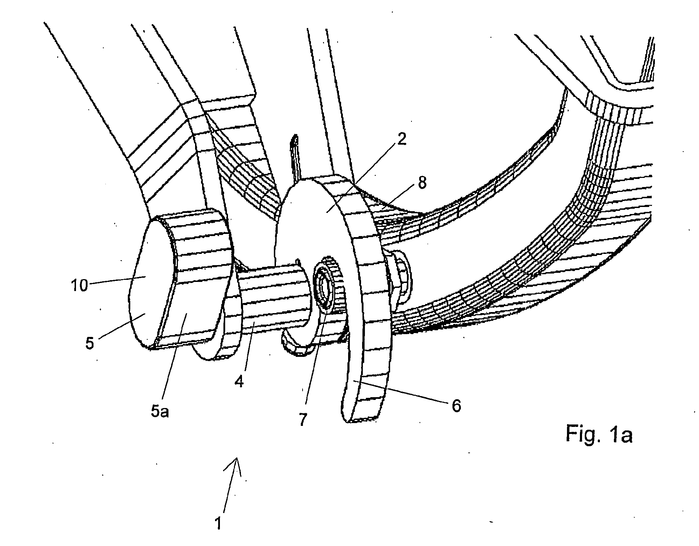

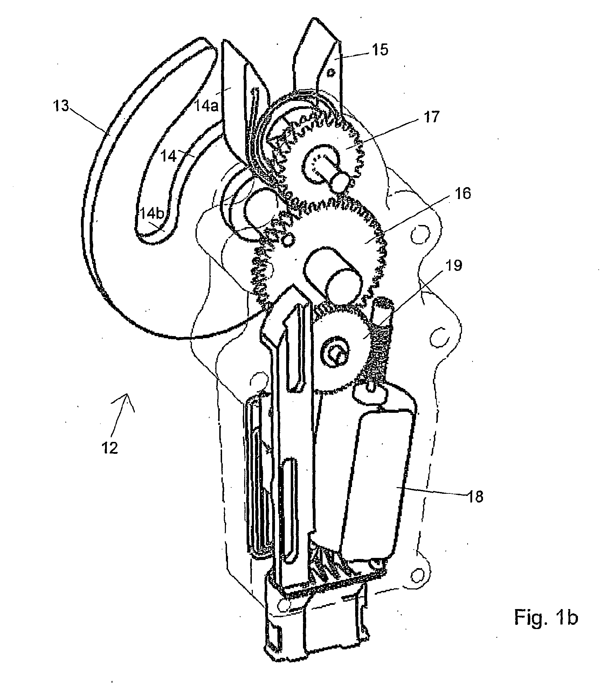

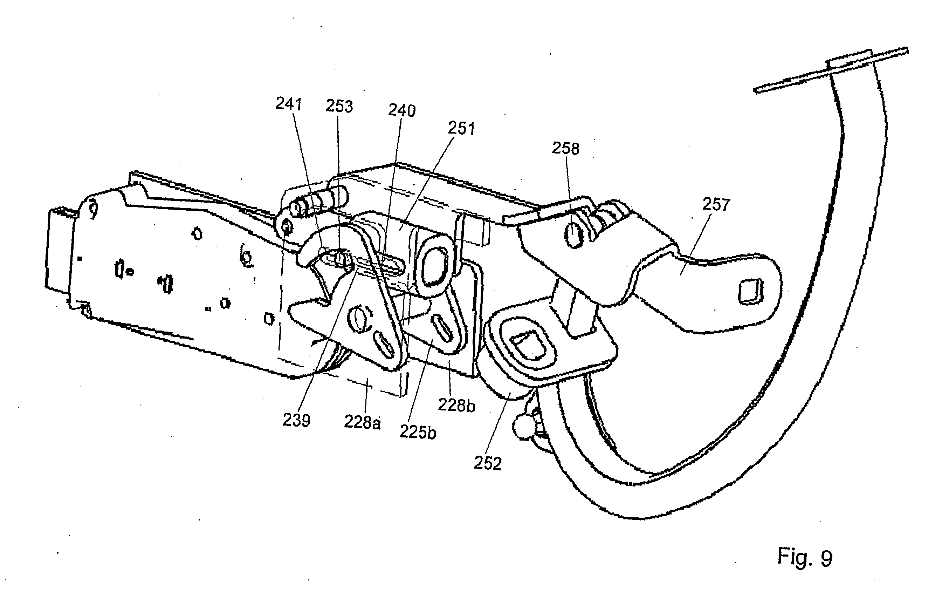

Vorausgeschickt wird, daß für die Fig. 1 bis Fig. 9 der Träger jeweils die Karosserie eines Kraftfahrzeuges, die erste Klappe jeweils als um eine nicht dargestellte Heckklappenachse an der Karosserie drehbar angelenkte Heckklappe und die zweite Klappe als Kofferraumklappe ausgebildet ist, wobei die Kofferraumklappe um eine angedeutete Kofferraumklappenachse (Achse 258 in Fig. 9) an der Heckklappe drehbar angelenkt ist. Die Verriegelungseinheit ist von der Heckklappenachse bzw. von der Kofferraumklappenachse beabstandet. Ist in der ersten Stellung der Verriegelungseinheit die Heckklappe mit Kofferraumklappe gekoppelt, so ist dieser Verbund als Einheit noch um die Heckklappenachse drehbar. Ist in der zweiten Stellung die Kofferraumklappe von der Heckklappe entkoppelt, so ist die Heckklappe im Bereich der Verriegelungseinheit an der Karosserie festgelegt und die Heckklappenachse nicht mehr bezüglich der Karosserie drehbar. Dagegen ist in der zweiten Stellung die Kofferraumklappe um die Kofferraumklappenachse an der Heckklappe drehbar angelenkt.

Fig. 1a zeigt ein Verriegelungselement 1 einer Verriegelungseinheit. Das Verriegelungselement 1 umfaßt ein im wesentlichen scheibenförmiges Korpus 2 mit einem Einführschlitz 3. Das Verriegelungselement 1 umfaßt weiter einen Stift 4, der im wesentlichen senkrecht von dem Korpus 2 absteht, wobei an einem Ende des Stiftes 4 ein Führungselement 5 vorgesehen ist, das eine Längserstreckung aufweist, so daß Seitenflächen 5a des Führungselementes 5 als Führungsflächen ausgebildet sind. Das Führungselement 5 ist über den Stift 4 mit dem Korpus 2 des Verriegelungselementes 1 drehfest verbunden und von dem Korpus 2 beabstandet. An dem Korpus 2 ist benachbart zu dem Einführschlitz 3 ein gekrümmter länglicher Abschnitt 6 ausgebildet.

Fig. 1a zeigt das Verriegelungselement 1 in einer Stellung, in der der längliche Abschnitt 6 nach Art eines Hakens einen Zapfen 7 umgreift, wobei der Zapfen 7 an einem Ende des Einführschlitzes 3 angeordnet ist. Der Zapfen 7 ist an einen nur abschnittsweise dargestellten Arm 8 einer in Fig. 1a nicht dargestellten zweiten Klappe befestigt. Der Zapfen 7 definiert eine Zapfenachse 9 und der Stift 4 eine Hebelachse 10, die von der Zapfenachse 9 beabstandet ist, so daß ein Drehen des Verriegelungselementes 1 um die Hebelachse 10 den Zapfen 7 außer Eingriff mit dem Einführschlitz 3 bringt und auch bezüglich des länglichen Abschnittes 6 freigibt. Das Verriegelungselement 1 ist an einer Auskragung 11 einer in Fig. 1a nicht weiter dargestellten ersten Klappe um die Hebelachse 10 drehbar aufgenommen. Für ein Freigeben des Zapfens 7 von dem Verriegelungselement 1 ist erforderlich, daß ein Drehmoment auf das Verriegelungselement 1 ausgeübt wird, wozu eine äußere Kraft insbesondere an dem Führungselement 5 angreift, das damit als Hebel für das Verriegelungselement 1 wirkt.

Fig. 1b zeigt eine Betätigungseinrichtung 12 für das Verriegelungselement 1 aus Fig. 1a, wobei die Betätigungseinrichtung 12 an einem nicht dargestellten Träger angebracht ist. Die Betätigungseinrichtung 12 umfaßt einen Schwenkhaken 13 mit einer Einbuchtung 14 mit einem offenen Ende 14a und einem geschlossenen Ende 14b. Die Betätigungseinrichtung 12 umfaßt weiter eine U-förmige Aufnahme 15, die bezüglich des Führungselementes 5 (Fig. 1 a) so ausgestaltet ist, daß die Seitenflächen 5a des Führungselementes 5 zwischen die Schenkel des U im wesentlichen formschlüssig aufgenommen werden können. Die U-förmige Aufnahme 15 ist mit einem ersten Zahnrad 17 insoweit drehfest verbunden, als daß zur Verzögerung der Bewegungen zueinander ein winkelbegrenzender Freigang zwischen der Aufnahme 15 und dem ersten Zahnrad 17 eingebaut ist, Der Schwenkhaken 13 wirkt mit einem zweiten Zahnrad 16, wobei das erste Zahnrad 17 mit dem zweiten Zahnrad 16 kämmend zusammen. Der Betätigungseinrichtung 12 ist ein Antrieb 18 zugeordnet, der ein drittes Zahnrad 19 in Drehung versetzt, das mit dem zweiten Zahnrad 16 zusammengreift.

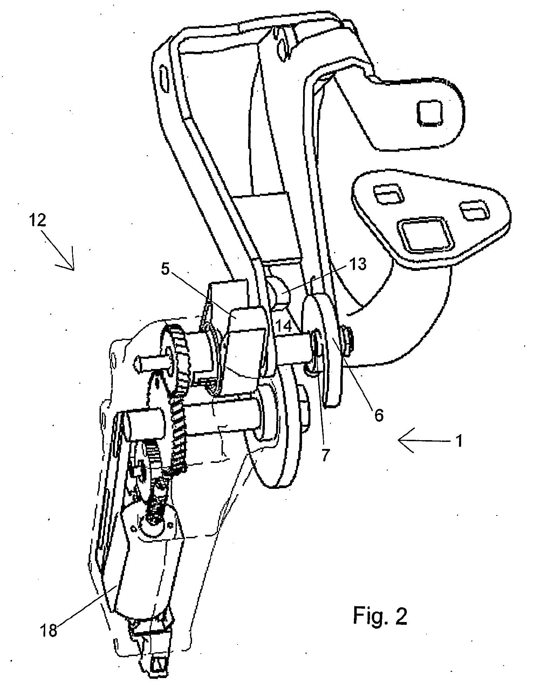

Fig. 2 zeigt eine Verriegelungseinheit, die das Verriegelungselement 1 aus Fig. 1a und die Betätigungseinheit 12 aus Fig. 1b umfaßt, in einer Stellung, in der eine Wirkverbindung zwischen dem Antrieb 18 und dem Verriegelungselement 1 hergestellt ist, so daß mittels des Antriebs 18 das Verriegelungselement 1 betätigbar ist. In der in Fig. 2 dargestellten Stellung ist das als Mitnehmer ausgebildete Führungselement 5 des Verriegelungselementes 1 mit den Seitenflächen 5a in die U-förmige Aufnahme 15 der Betätigungseinrichtung 12 aufgenommen. Der Zapfen 7 ist noch von dem länglichen Abschnitt 6 des Verriegelungselementes 1 umgriffen, der Stift 4 des Verriegelungselementes 1 ist noch nicht von dem Schwenkhaken 13 übergriffen, so daß der Stift 4 noch nicht in die Einbuchtung 14 aufgenommen ist. Zu beachten ist, daß eine Wirkverbindung nur zwischen dem als Mitnehmer ausgebildeten Führungselement 5 des Verriegelungselementes 1 und der U-förmigen Aufnahme 15 der Betätigungseinrichtung 12 auftritt.

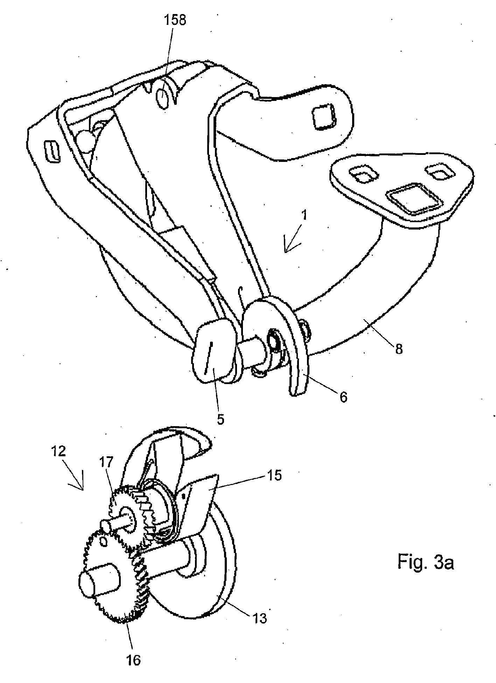

Fig. 3a zeigt die Verriegelungseinrichtung in einer ersten Stellung, bei der die Betätigungseinrichtung 12 und das Verriegelungselement 1 außer Wirkeingriff stehen. Das Verriegelungselement 1 ist an der Auskragung 11 der nicht dargestellten ersten Klappe drehbar befestigt und übergreift mit dem Abschnitt 6 den an dem Arm 8 der nicht dargestellten zweiten Klappe befestigten Zapfen 7. Zu beachten ist, daß die zweite Klappe um eine Drehachse 158 an der ersten Klappe drehbar angelenkt ist, wobei die Drehachse 158 der zweiten Klappe an der ersten Klappe einen Abstand von dem Zapfen 7 aufweist, so daß der von dem Verriegelungselement 1 umgriffene Zapfen 7 eine Drehung der zweiten Klappe um deren Drehachse an der ersten Klappe verhindert, so daß die erste Klappe und die zweite Klappe zu einer starren Einheit gekoppelt sind. Weil die erste Klappe ihrerseits um eine nicht dargestellte Drehachse an dem Träger drehbar angelenkt ist, ist in der in Fig. 3a dargestellten ersten Stellung der Verbund aus der ersten Klappe und der zweiten Klappe insgesamt um die Drehachse der ersten Klappe bezüglich des Trägers schwenkbar.

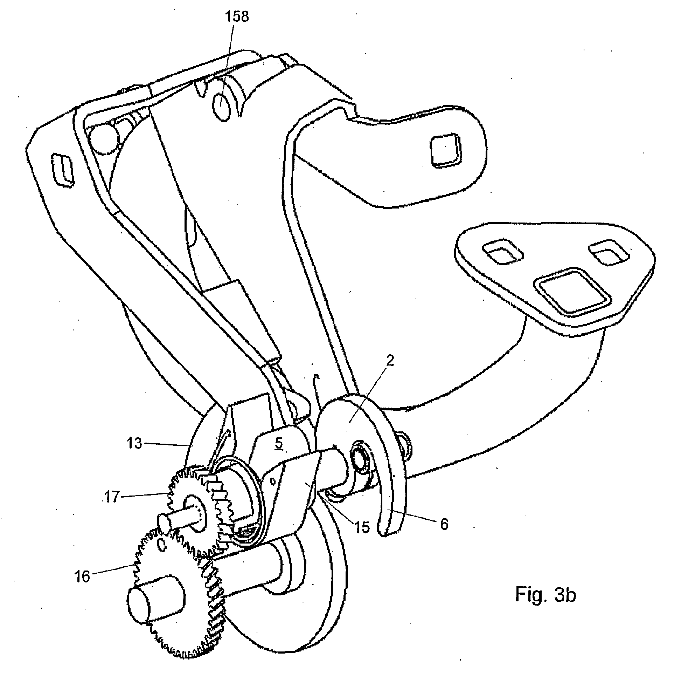

Die Stellung in Fig. 3b entspricht im wesentlichen der in Fig. 2 dargestellten Stellung, bei der die Betätigungseinrichtung 12 über das in deren U-förmige Aufnahme 15 eingreifendes Führungselement 5 mit dem Verriegelungselement 1 in Wirkverbindung tritt.

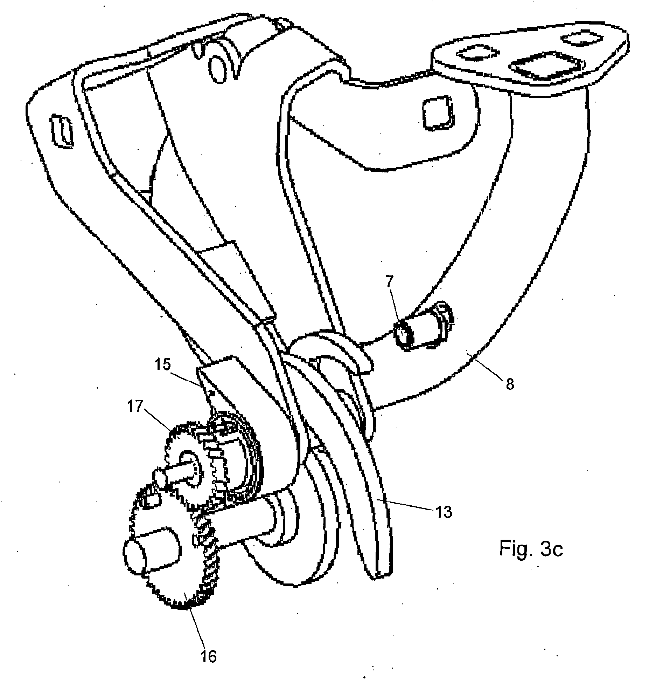

Fig. 3c zeigt eine zweite Stellung der Verriegelungseinheit, nach deren Betätigung aufgrund des Antriebes 18. Im Vergleich zu der in Fig. 3b dargestellten Stellung ist die U-förmige Aufnahme 15 im Gegenuhrzeigersinn gedreht, dadurch ist ebenfalls das Verriegelungselement 1 derart im Gegenuhrzeigersinn gedreht, daß der Zapfen 7 an dem Arm 8 der zweiten Klappe außer Eingriff mit dem Abschnitt 6 des Verriegelungselementes 1 gekommen ist und damit freigegeben ist, so daß die zweite Klappe nur noch an deren Drehachse an der ersten Klappe schwenkbar angebracht und damit gegenüber der ersten Klappe zum Verschwenken freigegeben ist. Aufgrund der gegenläufigen Bewegung der beiden Zahnräder 16 und 17 ist der Schwenkhaken 13 im Uhrzeigersinn verschwenkt und der Stift 4 des Verriegelungselementes 1 in dem geschlossenen Ende 14b der Einbuchtung 14 aufgenommen. Insgesamt ist das Verriegelungselement 1 und damit auch die erste Klappe an dem Träger festgelegt, wobei ein Verschwenken der ersten Klappe um deren Achse an dem Träger in der zweiten Stellung nicht mehr möglich ist.

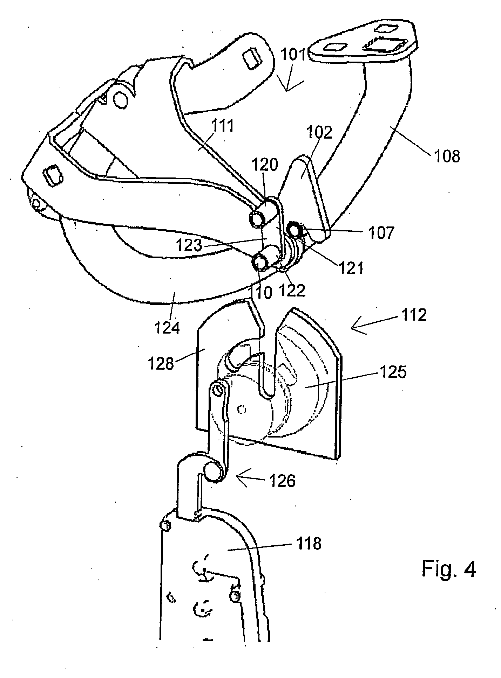

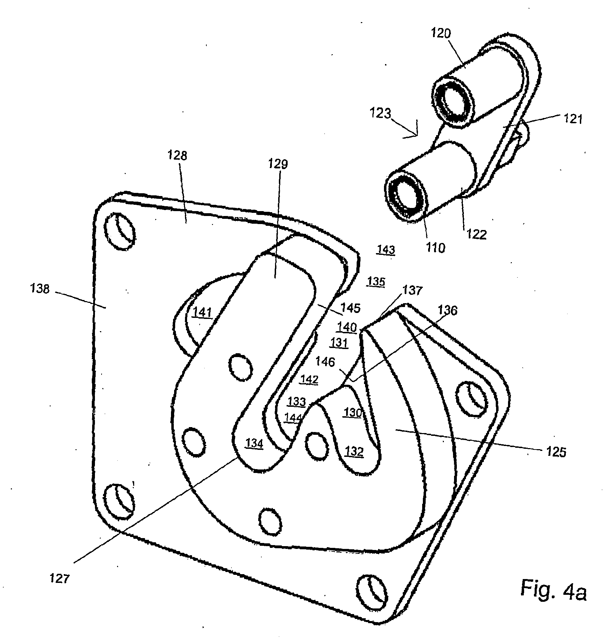

Fig. 4 zeigt das erste Ausführungsbeispiel, wobei an einem Arm 108, der mit einer nicht dargestellten zweiten Klappe starr verbunden ist, ein Zapfen 107 angeordnet ist, der von einem Verriegelungselement 101 umgriffen ist. Ein Korpus 102 des Verriegelungselementes 101 ist vergleichbar dem Korpus 2 des Verriegelungselementes 1 aus Fig. 1 bis Fig. 3c ausgebildet und weist einen Einführschlitz 102 auf, der an einem Ende den Zapfen 107 abschnittsweise annähernd formschlüssig aufnimmt. Das Verriegelungselement 101 weicht von dem Verriegelungselement 1 insofern ab, als daß das Verriegelungselement 101 einen als zylindrischen Bolzen 120 ausgebildeten Mitnehmer aufweist, der über einen Steg 121 mit einem weiteren zylindrischen Führungsstift 122 starr verbunden ist, so daß ein Hebel 123 ausgebildet ist, der um eine Drehachse 110, die im wesentlichen einer Achse 124 des Führungsstiftes 122 entspricht, drehbar ist. Der Führungsstift 122 ist mit dem Korpus 102 des Verriegelungselementes 101 drehfest verbunden, so daß eine Kraft, die auf den Bolzen 120 einwirkt, ein Drehen des Verriegelungselementes 101 ermöglicht. Der zylindrische Bolzen 120 ist dabei als Griff des um die Drehachse 110 drehbaren Hebels 123 ausgebildet. Das Verriegelungselement 101 ist an einer Auskragung 111 der nicht weiter dargestellten ersten Klappe drehbar aufgenommen.

Fig. 4 zeigt weiter eine Betätigungseinrichtung 112 für das Verriegelungselement 101. Die Betätigungseinrichtung 112 umfaßt eine Riegelscheibe 125, die von einem Antrieb 118 über ein Getriebe 126 für eine Drehung antreibbar ist, wobei die Riegelscheibe 125 in dem ersten Ausführungsbeispiel drehbar an dem Träger, speziell der Karosserie des Kraftfahrzeugs, um eine Riegelscheibenachse 127 drehbar gelagert ist, wozu das Getriebe 126 von der Riegelscheibenachse 127 beabstandet an der Riegelscheibe 125 angreift. Die Betätigungseinrichtung 112 umfaßt zusätzlich zu der Riegelscheibe 125 eine Riegelplatte 128, die an dem Träger feststehend angeordnet ist. In der Darstellung von Fig. 4 überdeckt die Riegelplatte 128 die Riegelscheibe 125 weitgehend.

Fig. 4a zeigt die Riegelscheibe 125 und die Riegelplatte 128 aus Fig. 4, wobei die Blickrichtung entlang der Riegelscheibenachse in einer zu Fig. 4 entgegengesetzten Richtung so gewählt ist, daß die Riegelscheibe 125 vor der Riegelplatte 128 erkennbar ist. Die Riegelscheibe 125 umfaßt ein im wesentlichen dreieckiges Korpus 129, dessen Ecken abgerundet sind. An dem Korpus 129 der Riegelscheibe 125 ist ein Langloch 130 angeordnet, wobei das Langloch 130 ein erstes, offenes Ende 131 und ein zweites, geschlossenes Ende 132 aufweist. Das zweite Ende 132 des Langlochs 130 ist im wesentlichen halbkreisförmig ausgestaltet. Die Riegelscheibe 125 umfaßt weiter ein Sackloch 133 mit einem ersten, geschlossenen Ende 134 und einem zweiten Ende 135, wobei das zweite Ende 135 des Sackloches 133 mit dem ersten Ende 131 des Langloches 130 zusammenfällt. Das erste Ende 134 des Sackloches 133 ist mit im wesentlichen halbkreisförmiger Kontur versehen, wobei ein gedachter Mittelpunkt des Halbkreises auf der Riegelscheibenachse 127 liegt. An dem ersten, offenen Ende 131 des Langlochs 130 ist dieses annähernd trichterartig verbreitert und bildet eine Führungsfläche 136 aus. Das Korpus 129 bildet an dem ersten Ende 131 des Langlochs eine Einführkante 137 aus.

Fig. 4a zeigt die Riegelplatte 128 mit einem Korpus 138 und einer Bohrung 139, deren erstes, offenes Ende 140 in Fig. 4a durch die Riegelscheibe 125 abschnittsweise verdeckt ist und deren zweites, geschlossenes Ende 141 im wesentlichen halbkreisförmig ausgebildet ist. Die Riegelplatte 128 umfaßt weiter eine Einführungsöffnung 142 mit einem ersten, offenen Ende 143 und einem zweiten, geschlossenen Ende 144. In der in Fig. 4a dargestellten ersten Stellung der Verriegelungseinheit ist die Riegelscheibe 125 bezüglich der Riegelplatte 128 derart ausgerichtet, daß das Sackloch 133 der Riegelscheibe 125 mit der Einführungsöffnung 143 der Riegelplatte 128 entlang einer durch die Riegelscheibenachse 127 definierten Sichtlinie weitgehend zur Deckung kommt; dabei überdeckt ein Wandabschnitt 145 des Sackloches 133 der Riegelscheibe 125 das erste offene Ende 140 der Bohrung 139 der Riegelplatte 128. Weiter deckt ein Wandabschnitt 146 der Einführungsöffnung 143 der Riegelplatte 128 das erste, offene Ende 131 des Langlochs 130 der Riegelscheibe 125 ab.

Abb. 4a zeigt weiter den als Mitnehmer vorgesehenen Bolzen 120 und den Führungsstift 122, die über den Steg 121 starr miteinander gekoppelt sind und insgesamt als Hebel 123 für die Betätigung des nicht dargestellten Verriegelungselementes 101 dienen, wobei der als Mitnehmer vorgesehene Bolzen 120 als Griff des Hebels ausgebildet und von der Hebelachse 110 beabstandet angeordnet ist.

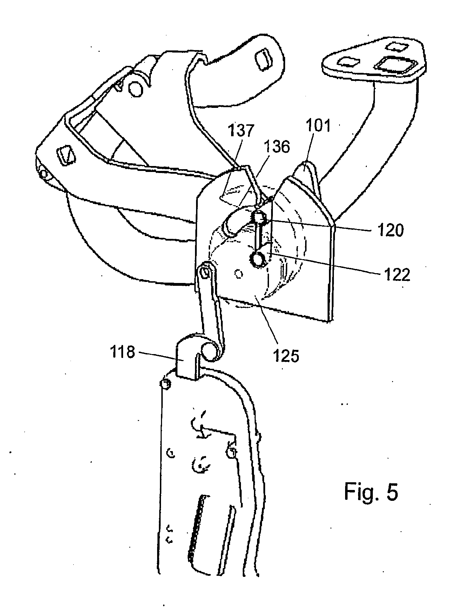

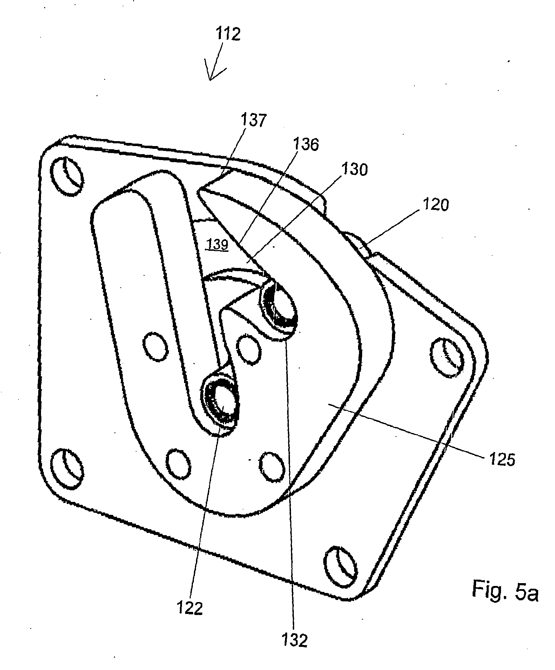

Fig. 5 bzw. 5a zeigen die Verriegelungseinheit in der ersten Zwischenstellung. Die Riegelscheibe 125 ist durch den Antrieb 118 entgegen dem Uhrzeigersinn um die Riegelscheibenachse 127 relativ zu dem Träger derart gedreht, daß der als Mitnehmer ausgebildete Bolzen 120 an dem zweiten, geschlossenen Ende 132 des Langloches 130 der Riegelscheibe 125 angeordnet ist. Der Führungsstift 122 ist an dem zweiten, geschlossenen Ende 134 des des Sackloches 133 der Riegelscheibe 125 sowie an dem zweiten, geschlossenen Ende 144 der Einführungsöffnung 142 der Riegelplatte 128 derart aufgenommen, daß die Achse 124 des Führungsstiftes 122 im wesentlichen in einer Verlängerung bzw. Fortsetzung der Riegelscheibenachse 127 liegt. Das in Fig. 5 nur teilweise sichtbare Verriegelungselement 101 hat seine Stellung im Vergleich zu der in Fig. 4 gezeigten Stellung nicht verändert, so daß die erste Klappe und die zweite Klappe noch zu der Einheit gekoppelt sind. Allerdings übergreift die Einführungskante 137 bzw. die Führungsfläche 136 des Langlochs 130 der Riegelscheibe 125 das erste, offene Ende 143 des Einführungsöffnung 142 der Riegelplatte 128 derart, daß ein Hinausbewegen des als Mitnehmer ausgebildeten Bolzens 120 in einer etwa durch eine gedachte Verbindungslinie zwischen dem Bolzen 120 und dem Führungsstift 122 gegebenen Richtung (die in etwa der Längserstreckung des nicht erkennbaren Stegs 121 aus Fig. 4 entspricht) nicht möglich ist. Der Bolzen 120 befindet sich ferner an dem ersten, offenen Ende 140 der Bohrung 139 der Riegelplatte 128.

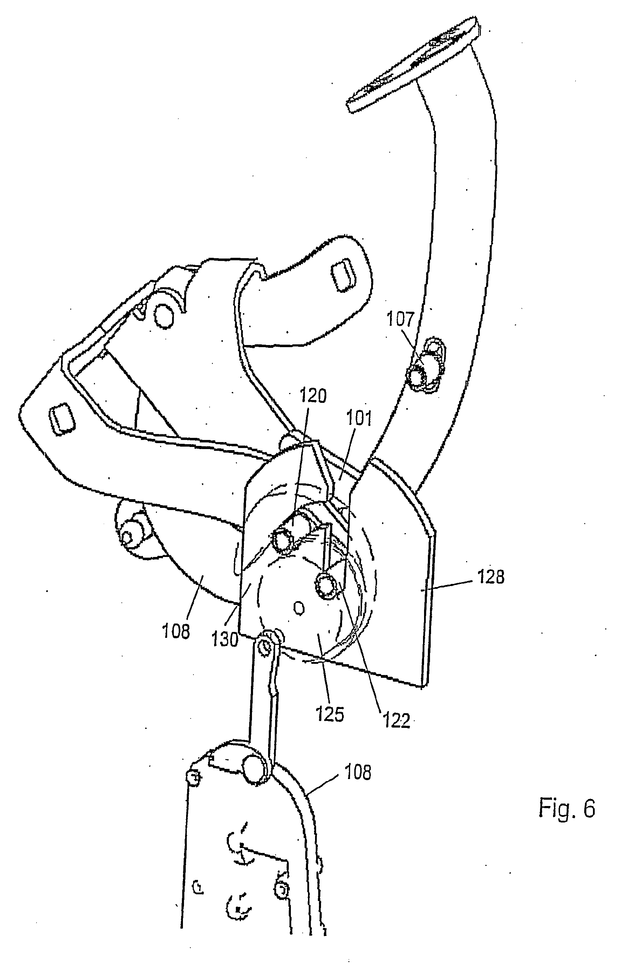

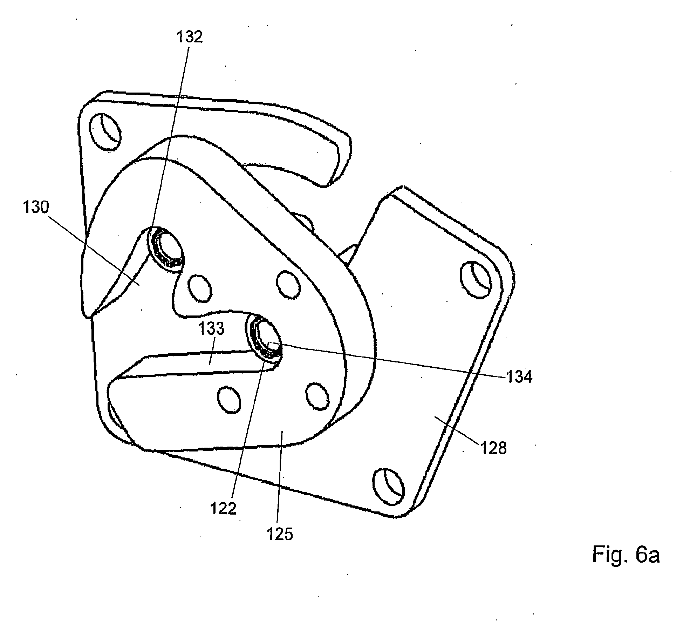

Fig. 6 bzw. 6a zeigen die Verriegelungseinheit in der zweiten Stellung. Dabei ist der als Bolzen 120 ausgebildete Mitnehmer an dem zweiten, geschlossenen Ende 132 des Langlochs 130 der Riegelscheibe 125 angeordnet. Die Riegelscheibe 125 ist im Vergleich zu der in Fig. 5 bzw. 5a dargestellten Stellung weiter im Uhrzeigersinn (beim Verriegeln nach links) um die Riegelscheibenachse 127 gedreht. Der Bolzen 120 ist an dem zweiten, geschlossenen Ende 141 der Bohrung 139 der Riegelplatte 128 angeordnet. Die Stellung des Führungsstiftes 122 an dem ersten, geschlossenen Ende 134 des Sacklochs 133 der Riegelscheibe 125 und an dem zweiten, geschlossenen Ende 144 der Einführungsöffnung 142 der Riegelplatte 128 ist im Vergleich zu der in Fig. 5 bzw. 5a dargestellten Stellung unverändert.

Wie in Fig. 6 ersichtlich, ist das nur abschnittsweise erkennbare Verriegelungselement 101 im Uhrzeigersinn nach links derart gedreht, daß der Zapfen 107 an dem Arm 108 nicht länger umgriffen ist und die zweite Klappe von der ersten Klappe freigegeben ist.

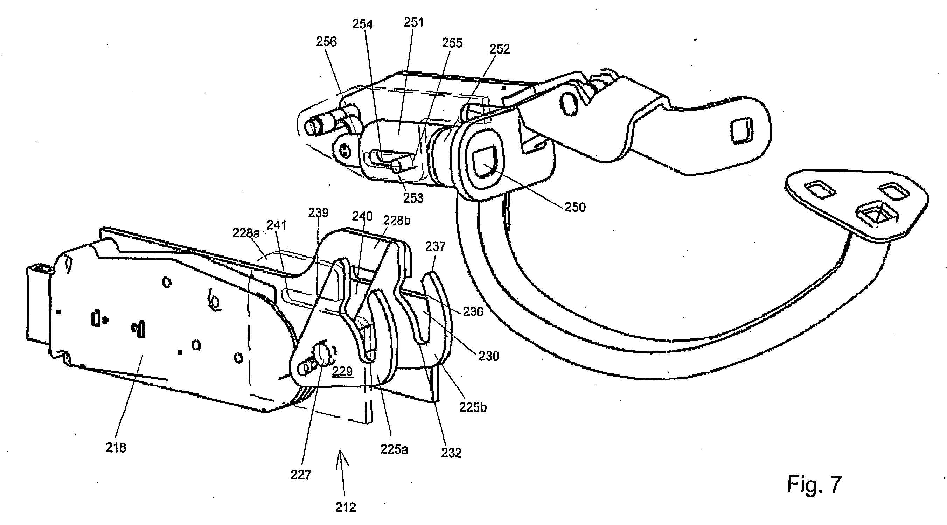

Fig. 7 zeigt das zweite Ausführungsbeispiel einer Verriegelungseinheit, die ein an einer nicht weiter dargestellten ersten Klappe angeordnetes Verriegelungselement 201 und eine dem Verriegelungselement 201 zugeordnete Betätigungseinrichtung 212 umfaßt, wobei die Betätigungseinrichtung 212 von einem motorischen Antrieb 218 antreibbar ist.

Das Verriegelungselement 201 umfaßt einen Stößel 250, der in einer fest mit der ersten Klappe gekoppelten Aufnahme 251 längsverschieblich gelagert ist. Der Stößel 250 durchsetzt in der ersten Stellung einen Führungsabschnitt 252, der an der zweiten Klappe fest angeordnet ist, in einer im wesentlichen formschlüssigen Weise, so daß die erste Klappe und die zweite Klappe durch den die Aufnahme 251 und den Führungsabschnitt durchsetzenden Stößel 250 zu einer starre Einheit gekoppelt sind. An dem Stößel 250 ist ein seitlich abstehender Stift 253 angeordnet, der in einer Führung 254 längsverschieblich geführt ist, wobei die Führung 254 nach Art eines Langlochs ausgebildet ist, mit einem ersten, geschlossenen Ende 255 und einem zweiten, geschlossenen Ende 256, wobei in der ersten Stellung der Verriegelungseinheit der Stift 253 des Stößels 250 an dem ersten Ende 255 der Führung 254 angeordnet ist. Der Stift 253 ist als Mitnehmer für die Betätigungseinrichtung 212 ausgebildet.

Die Betätigungseinrichtung 212 umfaßt eine erste Riegelplatte 228a und eine zweite Riegelplatte 228b, die beide an dem nicht dargestellten Träger befestigt sind, sowie eine erste Riegelscheibe 225a, die an der ersten Riegelplatte 228a drehbar befestigt ist, und eine zweite Riegelscheibe 225b, die an der zweiten Riegelplatte 228b drehbar befestigt ist, wobei die erste Riegelscheibe 225a mit der zweiten Riegelscheibe 225b starr verbunden und um eine gemeinsame Riegelscheibenachse 227 drehbar ist. Die erste Riegelscheibe 225a bzw. die erste Riegelplatte 228a ist zu der zweiten Riegelscheibe 225b bzw. zu der zweiten Riegelplatte 228b zu einer gedachten Mittelebene spiegelsymmetrisch aufgebaut, so daß im folgenden nur der Aufbau der ersten Riegelplatte 228a bzw. der der zweiten Riegelscheibe 225b beschrieben wird mit dem Verständnis, daß die zweite Riegelplatte 228b bzw. die erste Riegelscheibe 225a vergleichbar ausgestaltet ist. Zu beachten ist noch, daß die erste Riegelscheibe 225a bzw. die erste Riegelplatte 228a mit dem in Fig. 7 erkennbaren Stift 253 des Stößels 250 des Verriegelungselementes 201 zusammenwirkt. Zusätzlich umfaßt das Verriegelungselement 201 einen in den Fig. 7 bis 9 verdeckten weiteren Stößel 253' des Stößels 250, der mit der zweiten Riegelplatte 228b bzw. der zweiten Riegelscheibe 225b zusammenwirkt.

Die erste Riegelplatte 228a umfaßt ein Korpus 229 mit einer Bohrung 239, die ein erstes, offenes Ende 240 und ein zweites, geschlossenes Ende 241 aufweist. Die zweite Riegelscheibe 225b umfaßt ein Korpus 229, das ein Langloch 230 mit einem ersten, offenen Ende 231 und einem zweiten, geschlossenen Ende 232 aufweist. Das Langloch 230 weist an dem ersten Ende 231 eine Einführkante 237 auf, an die sich entlang der Erstreckung des Langlochs 230 eine Führungsfläche 236 anschließt, wobei sich das Langloch 230 entlang der Führungsfläche 236 auf das zweite, geschlossene Ende 232 des Langlochs 230 hin verjüngt.

In der in Fig. 7 dargestellten ersten Stellung der Verriegelungseinheit ist der als Mitnehmer ausgebildete Stift 253 des Stößels 250 außer Eingriff mit der Betätigungseinrichtung 212. Die motorisch antreibbaren Riegelscheiben 225a bzw. 225b mit den Langlöchern 230 sind bezüglich der Riegelplatten 228a, 228b derart ausgerichtet, daß ersten Enden 231 der Langlochs 230 der Riegelscheibe 225a (225b) mit den ersten Enden 240 der Bohrungen 230 der Riegelplatte 228a (228b) eine Aufnahme für den Stift 253 bzw. den nicht erkennbaren weiteren Stift des Stößels 250 bilden.

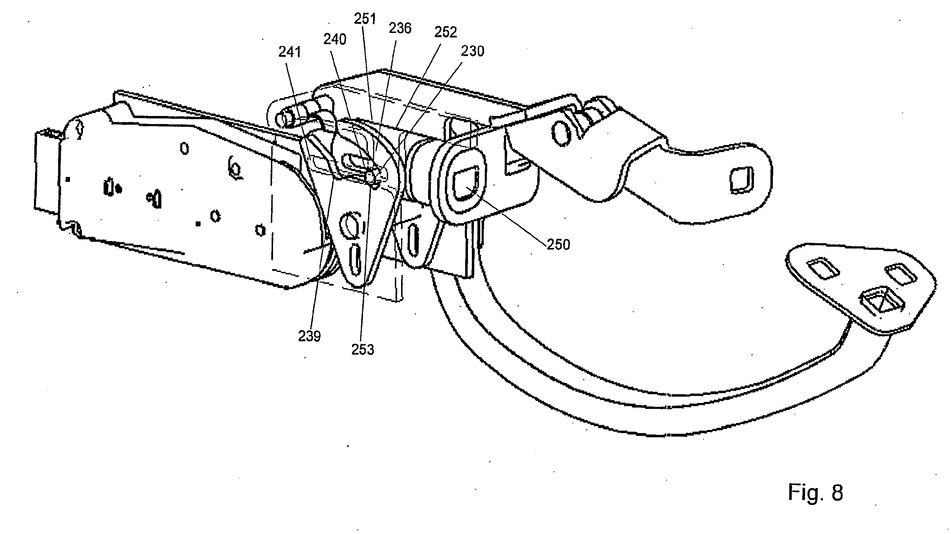

Fig. 8 zeigt die Verriegelungseinheit in einer der Zwischenstellung angenäherten Stellung, in der der Stößel 250 sowohl die Aufnahme 251 an der ersten Klappe als auch den Führungsabschnitt 252 der zweiten Klappe durchsetzt und die beiden Klappen damit aneinander festlegt. Der Stift 253 befindet sich an dem ersten offenen Ende 240 der Bohrung 239 der Riegelplatte 228a bzw. 228b. Aufgrund des motorischen Antriebs 218 ist die Riegelscheibe 225a, 225b im Vergleich zu der in Fig. 7 gezeigten Darstellung im Gegenuhrzeigersinn verschwenkt, so daß der Stift 253 innerhalb des Langlochs 230 aufgenommen und dort zwischen dem ersten, offenen Ende 231 und dem zweiten, geschlossenen Ende 232 angeordnet ist. Dabei ist der Stift 253 in Kontakt mit der Führungsfläche 236 des Langlochs 230. Die Zwischenstellung ist erst dann erreicht, wenn der Stift 253 an dem zweiten, geschlossenen Ende 232 des Langlochs 230 angekommen ist, so daß dann erst dann eine Wirkverbindung zwischen dem Antrieb 218 über das Langloch 230 und den Stift 253 mit dem Verriegelungselement 201 besteht. Die Einführkante 237 hat den Stift 253 bereits vor Erreichen der Zwischenstellung vollständig übergriffen, so daß ein Austreten des Stiftes 253 aus der zuvor durch das erste Ende 231 des Langlochs 230 und das erste Ende 240 der Bohrung 239 gebildeten Aufnahme nicht mehr möglich ist.

Fig. 9 zeigt die Verriegelungseinheit in der zweiten Stellung, wobei der Stößel 250 in der Aufnahme 251 an der ersten Klappe derart längsverschoben ist, daß der Stößel 250 nicht mehr den Führungsabschnitt 252 an der zweiten Klappe durchsetzt. Die zweite Klappe ist damit im Bereich des Stößels 250 nicht mehr an der ersten Klappe festgelegt. Da die zweite Klappe an einem Ausleger 257 der ersten Klappe um eine Achse 258 drehbar angelenkt ist, kann die zweite Klappe relativ zu der ersten Klappe um die Achse 258 geschwenkt werden.

In Fig. 9 ist weiter erkennbar, daß der Stift 253 in der zweiten Stellung in der Nähe des zweiten, geschlossenen Endes 241 der Bohrung 239 der Riegelplatte 228 a (bzw. entsprechend für den nicht erkennbaren weiteren Stift für die Riegelplatte 228b) angeordnet ist. Ein Endanschlag für den Stift 253 ist durch das in Fig. 9 verdeckte zweite Ende 256 der Führung 254 gegeben, so daß die Führung 254 die Verschiebbarkeit des Stiftes 253 in der Bohrung 239 bestimmt. In Fig. 9 ist die erste Riegelscheibe 225a, die den Stift 253 an dem zweiten Ende 232 des Langlochs 230 (Fig. 7 bzw. 8) in der Zwischenstellung gegriffen und in die in Fig. 9 erkennbare zweite Stellung geführt hat, nicht dargestellt. Die zweite Riegelscheibe 225b ist nur abschnittsweise erkennbar.

Die Erfindung funktioniert nun wie folgt, wobei zunächst auf das erste Ausführungsbeispiel (Fig. 4 bis Fig. 6) eingegangen wird:

Ausgehend von der in Fig. 4 bzw. 4a dargestellten ersten Stellung der Verriegelungseinheit, bei der die erste Klappe und die zweite Klappe zu einer starren Einheit gekoppelt sind, wird das Verriegelungselement 101 relativ zu der Betätigungseinrichtung 112 derart bewegt, daß der Führungsstift 122 durch das Sackloch 133 der Riegelscheibe 125 und die hierzu ausgerichtete Einführungsöffnung 142 der Riegelplatte 128 tritt, wobei der Führungsstift 122 in der Nähe des ersten, geschlossenen Endes 134 des Sackloches 133 und des zweiten, geschlossenen Endes 144 der Einführungsöffnung 142 verbracht wird, wobei der Führungsstift 122 noch ein geringes Spiel zu dem zweiten Ende 144 der Einführungsöffnung 142 aufweist. In dieser ersten Stellung der Verriegelungseinheit befindet sich der als Mitnehmer ausgebildete Bolzen 120 an dem ersten, offenen Ende 131 des Langlochs 130 sowie an dem ersten, offenen Ende 140 der Bohrung 139 der Riegelplatte 128.

Im weiteren Verlauf wird der motorische Antrieb 118 betätigt, um die Riegelscheibe 125 um die Riegelscheibenachse 127 im Gegenuhrzeigersinn zu drehen. Dabei übergreift die Einführkante 137 der Riegelscheibe 125 den als Mitnehmer ausgebildeten Bolzen 120 sowie das erste, offene Ende des Sacklochs 133, wobei im weiteren Verlauf der Drehung der Riegelscheibe 125 der Bolzen 120 mit der Führungsfläche 136 des Langlochs 130 der Riegelscheibe 125 in Kontakt kommt. Weil das Langloch 130 sich im Bereich der Führungsfläche 136 verjüngt, wird der Bolzen 120 und mit diesem zusammen der Führungsstift 122 im wesentlichen entlang der Längserstreckung des Sacklochs 133 gedrückt, wobei das Spiel des Führungsstiftes 122 gegenüber dem ersten, geschlossenen Ende 134 des Sacklochs 133 beseitigt wird. Die Aufgabe der Einführungskante 137 sowie der Führungsfläche 136 ist es, den Bolzen 120 in die Einführungsöffnung 142 der Riegelplatte 128 zu ziehen, bis er vor dem ersten offenenEnde 140 der Bohrung 139 steht. Abgesehen von der Wirkung der Führungsfläche 136 auf den Bolzen 120 wird auf diesen keine wesentliche Kraft ausgeübt, so daß der als Griff des Hebels 123 wirkende Bolzen 120 noch kein Drehen des Verriegelungselementes 101 ermöglicht. Die Übertragung eines Drehmomentes auf den Hebel 123 ist auch dadurch erschwert, daß die Riegelscheibenachse 127 mit der Achse 124 des Führungsstiftes 122 zumindest annähernd ausgefluchtet ist Aufgrund des anfänglichen geringen Spiels des Führungsstiftes 122 bezüglich des zweiten geschlossenen Endes 134 des Sacklochs 133 der Riegelscheibe 125 ist sichergestellt, daß eine exakte Ausrichtung der Achse 124 des Führungsstiftes 122 relativ zu der Riegelscheibenachse 127 möglich ist.

Im weiteren Verlauf der Bewegung der Riegelscheibe 125 gelangt der Bolzen 120 an das zweite, geschlossene Ende 132 des Langlochs 130. In dieser Zwischenstellung der Verriegelungseinheit wird eine Wirkverbindung zwischen dem Antriebe 118 und dem als Griff des Hebels 123 wirkenden Bolzen 120 hergestellt, aufgrund derer der Bolzen 120 bewegt und damit der Hebel 123 derart verschwenkt wird, daß das mit dem Hebel 123 drehfest gekoppelte Verriegelungselement 101 entgegen dem Uhrzeigersinn so verdreht wird, daß das an der ersten Klappe mindestens mittelbar drehbar aufgenommene Verriegelungselement 101 den an der zweiten Klappe mindestens mittelbar befestigten Zapfen 107 freizugeben beginnt, so daß im Bereich des Zapfens 107 die zweite Klappe nicht länger an die erste Klappe gekoppelt ist. Dabei ist das erste, offene Ende 135 des Sacklochs 133 der Riegelscheibe 125 durch eine Seite des Langlochs 130 übergriffen, wodurch der Bolzen 120 nicht mehr aus dem Sackloch 133 bzw. aus dem Langloch 130 austreten kann. In der Zwischenstellung, wenn die Wirkverbindung zwischen dem Bolzen 120 und der Riegelscheibe 125 dadurch hergestellt wird, daß der Bolzen 120 zumindest annähernd formschlüssig an dem zweiten, geschlossenen Ende 132 des Langlochs 130 der Riegelscheibe 125 aufgenommen ist, befindet sich der Führungsstift 122 an dem ersten, geschlossenen Ende 134 des Sacklochs 133 und wird dort annähernd spielfrei und formschlüssig aufgenommen, so daß die Achse 124 des Führungsstiftes 122 mit der Riegelscheibenachse 127 ausgefluchtet ist und eine Wirkverbindung zwischen dem Verriegelungselement 101 ausschließlich über die Mitnahme des Bolzens 120 durch die Riegelscheibe 125 vermittelt wird und nicht durch eine auf den Führungsstift 122 wirkende Kraft überlagert werden kann. Die formschlüssige Lagerung des Führungsstiftes 122 zwischen dem geschlossenen Ende 134 des Sackloches' 133 der Riegelscheibe 125 und dem geschlossenen Ende 144 der Einführungsöffnung 142 der Riegelplatte 138 legt die erste Klappe an dem Träger fest.

Durch die Riegelscheibe 125 wird der Bolzen 120 entlang der in der Riegelplatte 128 angeordneten Bohrung 139 geführt, an deren ersten, offenen Ende 140 der Bolzen 120 in der ersten Stellung und in der Zwischenstellung und an deren zweiten, geschlossenen Ende 141 der Bolzen 120 in der zweiten Stellung der Verriegelungseinheit angeordnet ist. Da der Bolzen 120 als Griff des Hebels 123 des Verriegelungselementes 101 ausgebildet ist, ist in der zweiten Stellung das Verriegelungselement 101 derart gedreht, daß der Zapfen 107 freigegeben wird und die zweite Klappe im Bereich des Zapfens 107 nicht mehr an die erste Klappe gekoppelt ist. Der Bolzen 120 ist allerdings an der an dem Träger befestigten Riegelplatte 128 derart aufgenommen, daß der Bolzen 120 die Bohrung 139 in entgegengesetzter Richtung nicht ohne weiteres durchlaufen kann, so daß die erste Klappe, an der der Bolzen 120 mindestens mittelbar drehbar aufgenommen ist, im Bereich des Bolzens 120 an dem Träger festgelegt ist. Weil der Bolzen 120 im wesentlichen eine Drehung um die Riegelscheibenachse 127 beschreibt, ist die den Bolzen aufnehmende Bohrung 139 der Riegelplatte 128 als langlochartiges Kreissegment eines um die Riegelscheibenachse 127 gedachten Kreises ausgestaltet.

Wurde vorstehend das Verbringen der ersten und zweiten Klappe von der ersten in die zweite Stellung mittels der Verriegelungseinheit beschrieben, so kann durch Umkehren der Drehrichtung der Riegelscheibe 125 die Verriegelungseinheit von der zweiten Stellung in die erste Stellung zurück verbracht werden. Dazu dreht sich die Riegelscheibe 125 im Gegenuhrzeigersinn, so daß der an dem zweiten Ende 141 der Bohrung 139 befindliche Bolzen von dem Wandabschnitt 145 der Riegelscheibe 125 durch die Bohrung 139 hin zu deren ersten, offenen Ende 140 geführt wird, wobei der Führungsstift 122 im wesentlichen ortsfest verbleibt. Nach Beendigung der Drehung der Riegelscheibe 125 befindet sich der Bolzen 120 an dem ersten Ende 140 der Bohrung 139 und zugleich an dem ersten, offenen Ende 131 des Langlochs 130 und dem zweiten, offenen Ende 135 des Sacklochs 133, während die Einführkante 137 der Riegelscheibe 125 das erste Ende 140 der Bohrung 139 soweit freigegeben hat, daß der Bolzen 120 und der Führungsstift 122 außer Eingriff mit der Riegelscheibe 125 und mit der Riegelplatte 128 gebracht werden kann.

Das zweite Ausführungsbeispiel (Fig. 7 bis 9) unterscheidet sich von dem ersten Ausführungsbeispiel (Fig. 4 bis Fig. 6) im wesentlichen darin, daß das Verriegelungselement 201 einen längsverschieblichen Stößel 250 und keinen durch eine Drehung zu betätigenden Hebel 123 und ein Verriegelungselement 101 aufweist.

Ausgehend von der in Fig. 7 dargestellten ersten Stellung der Verriegelungseinheit, bei der die erste Klappe und die zweite Klappe zu einer Einheit gekoppelt sind, wird der Stift 253 an das erste offene Ende 240 der Bohrung 239 der Riegelplatte 228a bzw. 228b verbracht, in welcher Stellung der Stift 253 sich ebenfalls an dem ersten, offenen Ende 231 des Langlochs 230 befindet. In dieser Stellung durchsetzt der Stößel 250 sowohl die der ersten Klappe zugeordnete Aufnahme 251 als auch den der zweiten Klappe zugeordneten Führungsabschnitt 252 und koppelt derart die beiden Klappen aneinander. Wird nun die Riegelscheibe 225a, 225b betätigt, so übergreift die Einführkante 237 den Stift 253 des Stößels 250, wobei das Langloch 230 relativ zu dem anfänglich im wesentlichen ortsfesten Stift 253 so bewegt wird, daß der Stift 253 in Kontakt mit der Führungsfläche 236 des Langlochs 230 erhält, so daß der Stift 253 etwas nach unten, in das Langloch 230 gezogen wird. Eine seitliche Kraft, die zum Verschieben des Stößels 250 erforderlich ist, wird anfänglich noch nicht auf den Stift 253 und damit auf den Stößel 250 ausgeübt (Fig. 7).

Im weiteren Verlauf der Bewegung des Langlochs 230 wird der Stift 253 an dessen zweiten, geschlossenen Ende 232 aufgenommen, so daß dann eine Wirkverbindung zwischen dem die Riegelscheibe 225a, 225b antreibenden Antrieb 218 und dem mit dem Stift 253 fest verbundenen Stößel 250 hergestellt wird. Ausgehend von der Zwischenstellung, in der der Stift 253 an dem zweiten Ende 232 des Langlochs 230 aufgenommen wird, wird der Stift 253 durch das Langloch 230 geführt und durchläuft die Bohrung 239 in der Riegelplatte 228a, 228b. In der Zwischenstellung übergreift die Einführkante 237 das erste offene Ende 240 der Bohrung 239 der Riegelplatte 228a" 228b, so daß der Stift 253 nicht mehr ohne weiteres in die Ausgangsstellung zurückgebracht werden kann. Insbesondere sind in der Zwischenstellung die erste Klappe und die zweite Klappe noch aneinander befestigt, allerdings sind beide Klappen gemeinsam über den Stift 253 zumindest vorläufig an dem Träger festgelegt.

Die weitere Bewegung des Stiftes 253 aufgrund des diesen führenden Langlochs 230 wird dadurch begrenzt, daß der Stift 253 an das zweite Ende 256 der Führung 254 gelangt. In dieser zweiten Stellung ist der Stößel 250 aus dem der zweiten Klappe zugeordneten Führungsabschnitt 252 herausgetreten und gibt die zweite Klappe bezüglich der ersten Klappe derart frei, daß die zweite Klappe um die Achse 258 drehen kann. Die erste Klappe ist durch den an dem Träger festgelegten Stößel 250, der der ersten Klappe über die Aufnahme 251 zugeordnet ist, im Bereich des Stiftes 253 festgelegt.

Auch in dem zweiten Ausführungsbeispiel wird durch Umkehren der Drehrichtung der Riegelscheibe 225a, 225b der Stift 253 aus der Bohrung 239 der Riegelplatte 228a, 228b heraus bewegt, um die beiden Klappen von der zweiten Stellung in die erste Stellung mittels der Verriegelungseinrichtung zurück zu verbringen.

In den beiden vorstehend beschriebenen Ausführungsbeispielen waren die Riegelscheiben 125 bzw. 225a und 225b jeweils drehbar an dem Träger gelagert. Es versteht sich aber, daß auch eine andere Lagerung, insbesondere eine längsverschiebliche Lagerung von Riegelscheiben vorgesehen sein kann, speziell dann, wenn das Verriegelungselement längsverschieblich gelagert ist.

Bei den beiden vorstehend beschriebenen Ausführungsbeispielen war das Langloch 130, 230 der Riegelscheibe 125 bzw. 225a und 225b jeweils ein an einem Ende offener Ausschnitt von im wesentlichen gekrümmt-ovaler Kontur. Es versteht sich, daß ein Langloch auch eine andere Kontur aufweisen kann. Wird beispielsweise bei dem zweiten Ausführungsbeispiel eine vertikal verschiebliche Riegelscheibe vorgesehen, kann das Langloch einen dreieckigen Umriß aufweisen, beispielsweise in Form eines rechtwinkligen Dreiecks, bei dem in der ersten Stellung der Mitnehmer an der ersten Kante zwischen einer der Katheten und der Hypothenuse aufgenommen ist, im weiteren Verlauf der Längsbewegung der Riegelscheibe entlang der Hypothenuse des Dreiecks geführt wird und in der zweiten Stellung an der zweiten Kante zwischen der anderen Kathete und der Hypothenuse aufgenommen ist.

Es versteht sich weiter, daß für ein Kraftfahrzeug, dessen Karosserie dem oben beschriebenen Träger entspricht, spiegelbildlich zu einer Längsmittelebene der Karosserie auf jeder Seite jeweils eine Verriegelungseinheit, wie oben beschrieben, vorgesehen sein kann.

In den vorstehend beschriebenen Ausführungsbeispielen war zusätzlich zu der angetriebenen Riegelscheibe eine Riegelplatte vorgesehen, die an dem Träger befestigt war, wobei die Riegelplatte in der Bohrung den Mitnehmer aufnimmt. Die Riegelplatte hat dabei die Aufgabe, die bei der Führung des Mitnehmers einwirkenden Kräfte aufzunehmen. Es versteht sich, daß eine Riegelplatte auch weggelassen sein kann.

Insbesondere ist es möglich, den Mitnehmer nur mit einer angetriebenen Riegelscheibe zu führen. Speziell kann dazu die Riegelscheibe in der ersten Stellung gefedert an dem Träger gelagert sein, wobei der Mitnehmer die Einführungskante der Riegelscheibe anfänglich niederdrückt, worauf die Riegelscheibe zurückschnellt und dabei mit der Einführungskante den Mitnehmer übergreift, um ein weiteres sicheres Führen des Mitnehmers in dem Langloch zu ermöglichen. Für das Führen des Mitnehmers ist eine feste Abstützung der Riegelscheibe an dem Träger erforderlich, wozu die anfängliche federnde Lagerung der Riegelscheibe aufgehoben werden kann, sobald der Mitnehmer in dem Langloch aufgenommen ist. Für das Umschalten zwischen der federnden Lagerung und der festen Abstützung der Riegelscheibe an dem Träger kann eine Sensorik vorgesehen sein, die erfaßt, wann der Mitnehmer in das Langloch der Riegelscheibe eintritt.

Es versteht sich weiter, daß die Verriegelungseinheit einen Sensor umfassen kann, der ermittelt, ob sich der Mitnehmer an dem offenen Ende des Langlochs befindet, so daß die Riegelscheibe in Bewegung gesetzt werden kann. Ein derartiger Sensor kann mit dem Antrieb der Riegelscheibe derart gekoppelt sein, daß der Antrieb erst dann die Riegelscheibe in Bewegung setzt, wenn der Sensor erfaßt, daß der Mitnehmer eine geeignete Stellung in Bezug auf das Langloch der Riegelscheibe erreicht hat. Es versteht sich ferner, daß der gleiche Sensor oder aber ein weiterer Sensor die Bewegung des Mitnehmers verfolgt und das Erreichen der zweiten Stellung erfaßt, um ein Signal abgeben zu können, daß die Verriegelung der Klappen korrekt ausgeführt wurde.

## Patentansprüche

1. Verriegelungseinheit für eine erste Klappe, eine zweite Klappe und einen Träger, umfassend
ein an der ersten Klappe bewegbar aufgenommenes Verriegelungselement (101; 201) mit einem Mitnehmer (120; 253), und
eine antreibbares Betätigungseinrichtung (112; 212) zum Bewegen des Verriegelungselements (101; 201),
wobei das Verriegelungselement (101; 201) in einer ersten Stellung die erste Klappe mit der zweiten Klappe zu einer Einheit koppelt und in einer zweiten Stellung die erste Klappe von der zweiten Klappe freigibt und in einer Zwischenstellung die erste Klappe und die zweite Klappe gemeinsam an dem Träger festlegt,
wobei zwischen dem Mitnehmer (120; 253) des Verriegelungselementes (101; 201) und der Betätigungseinrichtung (112; 212) in der Zwischenstellung eine Wirkverbindung herstellbar ist,
**dadurch gekennzeichnet,**
**daß** die Betätigungseinrichtung (112; 212) eine an dem Träger beweglich angeordnete Riegelscheibe (125; 225a, 225b) umfaßt, und daß die Riegelscheibe (125; 225a, 225b) ein Langloch (130; 230) mit einem ersten, offenen Ende (131; 231) und einem zweiten, geschlossenen Ende (132; 232) aufweist, wobei in der ersten Stellung der Mitnehmer (120; 253) an dem ersten Ende (131; 231) des Langlochs (130; 230) und in der Zwischenstellung an dem zweiten Ende (132; 232) des Langlochs (130; 230) angeordnet ist.

2. Verriegelungseinheit nach Anspruch 1, wobei an dem Träger eine Riegelplatte (128; 228a, 228b) befestigt ist, und wobei die Riegelplatte (128; 228a, 228b) eine Bohrung (139; 239) aufweist, die der Mitnehmer (120; 253) zumindest abschnittsweise durchläuft.

3. Verriegelungseinheit nach Anspruch 1 oder 2, wobei die Riegelscheibe (125; 225a, 225b) an dem Träger um eine Riegelscheibenachse (127; 227) drehbar gelagert ist.

4. Verriegelungseinheit nach einem der Ansprüche 1 bis 3, wobei das Verriegelungselement (101) einen drehbar gelagerten Hebel (123) umfaßt, und wobei der Mitnehmer (120) als Griff des Hebels (123) ausgebildet ist.

5. Verriegelungseinheit nach Anspruch 4, wobei in der zweiten Stellung eine Drehachse (110) des Hebels (123) im wesentlichen in einer Verlängerung der Riegelscheibenachse (127) ausgerichtet ist.

6. Verriegelungseinheit nach Anspruch 4 oder 5, wobei die Riegelscheibe (125) ein Sackloch (133) mit einem ersten, geschlossenen Ende (134) und einem zweiten, offenen Ende (135) aufweist, und wobei das zweite Ende (135) des Sackloches (133) sich in das erste Ende (131) des Langlochs (130) der Riegelscheibe (125) öffnet.

7. Verriegelungseinheit nach einem der Ansprüche 1 bis 3, wobei das Verriegelungselement (201) als in einer der ersten Klappe zugeordneten Aufnahme (251) längsverschieblich gelagerter Stößel (250) ausgebildet ist, der in der ersten Stellung einen der zweiten Klappe zugeordneten Führungsabschnitt (252) durchsetzt.

8. Verriegelungseinheit nach Anspruch 7, wobei der Mitnehmer (253) als von dem Stößel (250) seitlich abstehender, in einer Führung (254) verschieblicher Stift ausgebildet ist.

9. Verriegelungseinheit nach Anspruch 8, wobei der Stift (253) in der zweiten Stellung an einem zweiten Ende (256) der Führung (254) angeordnet ist.

10. Verriegelungseinheit nach einem der Ansprüche 1 bis 9, wobei das erste Ende (131; 231) des Langlochs (130; 230) eine Führungsfläche (136; 236) aufweist, mit der der Mitnehmer (120; 253) in der ersten Stellung zusammenwirkt.

11. Verriegelungseinheit nach Anspruch 10, wobei die Führungsfläche (136; 236) als abschnittsweise Verjüngung des Langlochs (130; 230) ausgebildet ist.

12. Verriegelungseinheit nach einem der Ansprüche 1 bis 11, wobei der Träger als Karosserie eines Kraftfahrzeuges ausgebildet ist.

13. Verriegelungseinheit nach Anspruch 12, wobei die erste Klappe als Heckklappe des Kraftfahrzeuges ausgebildet ist, und wobei die Heckklappe um eine Heckklappenachse an der Karosserie schwenkbar gelagert ist.

14. Verriegelungseinheit nach Anspruch 13, wobei die zweite Klappe als Kofferraumklappe des Kraftfahrzeuges ausgebildet ist, und wobei die Kofferraumklappe an der Heckklappe um eine Kofferraumklappenachse schwenkbar gelagert ist.

## Claims

1. A locking unit for a first flap, a second flap and a support, comprising
a locking element (101; 201) which is held movably on the first flap and has a driver (120; 253), and
a drivable actuating device (112; 212) for moving the locking element (101; 201),
wherein the locking element (101; 201), in a first position, couples the first flap to the second flap to form a unit and, in a second position, releases the first flap from the second flap and, in an intermediate position, fixes the first flap and the second flap together on the support, and
wherein an operative connection can be produced between the driver (120; 253) of the locking element (101; 201) and the actuating device (112; 212) in the intermediate position,
**characterized in**
**that** the actuating device (112; 212) comprises a locking disk (125; 225a, 225b) which is arranged movably on the support, and that the locking disk (125; 225a, 225b) has an elongated hole (130; 230) with a first, open end (131; 231) and a second, closed end (132; 232), with, in the first position, the driver (120; 253) being arranged at the first end (131; 231) of the elongated hole (130; 230) and, in the intermediate position, being arranged at the second end (132; 232) of the elongated hole (130; 230).

2. The locking unit as claimed in claim 1, wherein a locking plate (128; 228a, 228b) is fastened to the support, and wherein the locking plate (128; 228a, 228b) has a bore (139; 239) through which the driver (120; 253) at least partially passes.

3. The locking unit as claimed in claim 1 or 2, wherein the locking disk (125; 225a, 225b) is mounted on the support in a manner such that it can rotate about a locking disk axis (127; 227).

4. The locking unit as claimed in one of claims 1 to 3, wherein the locking element (101) comprises a rotatably mounted lever (123), and wherein the driver (120) is designed as a handle of the lever (123).

5. The locking unit as claimed in claim 4, wherein, in the second position, an axis of rotation (110) of the lever (123) is aligned essentially as an extension of the locking disk axis (127).

6. The locking unit as claimed in claim 4 or 5, wherein the locking disk (125) has a blind hole (133) with a first, closed end (134) and a second, open end (135), and wherein the second end (135) of the blind hole (133) opens into the first end (131) of the elongated hole (130) of the locking disk (125).

7. The locking unit as claimed in one of claims 1 to 3, wherein the locking element (201) is designed as a slide (250) which is mounted in a longitudinally displaceable manner in a receptacle (251) assigned to the first flap and, in the first position, passes through a guide section (252) assigned to the second flap.

8. The locking unit as claimed in claim 7, wherein the driver (253) is designed as a pin which protrudes laterally from the slide (250) and is displaceable in a guide (254).

9. The locking unit as claimed in claim 8, wherein, in the second position, the pin (253) is arranged at a second end (256) of the guide (254).

10. The locking unit as claimed in one of claims 1 to 9, wherein the first end (131; 231) of the elongated hole (130; 230) has a guide surface (136; 236) with which the driver (120; 253) interacts in the first position.

11. The locking unit as claimed in claim 10, wherein the guide surface (136; 236) is designed as a partial tapering of the elongated hole (130; 230).

12. The locking unit as claimed in one of claims 1 to 11, wherein the support is designed as the bodywork of a motor vehicle.

13. The locking unit as claimed in claim 12, wherein the first flap is designed as a tailgate of the motor vehicle, and wherein the tailgate is mounted on the bodywork in a manner such that it can pivot about a tailgate axis.

14. The locking unit as claimed in claim 13, wherein the second flap is designed as a trunk flap of the motor vehicle, and wherein the trunk flap is mounted on the tailgate in a manner such that it can pivot about a trunk flap axis.

## Revendications

1. Unité de verrouillage d'un premier volet, d'un deuxième volet et d'un support, ladite unité comportant
un élément de verrouillage (101 ; 201) qui est reçu de façon mobile au niveau du premier volet et qui est doté d'un entraîneur (120 ; 253), et
un mécanisme d'actionnement entraînable (112 ; 212) destiné à déplacer l'élément de verrouillage (101 ; 201),
l'élément de verrouillage (101 ; 201) couplant dans une première position le premier volet au deuxième volet pour former une unité et libérant dans une deuxième position le premier volet du deuxième volet et fixant dans une position intermédiaire le premier volet et le deuxième volet ensemble au support,
une liaison active pouvant être établie dans la position intermédiaire entre l'entraîneur (120 ; 253) de l'élément de verrouillage (101 ; 201) et le mécanisme d'actionnement (112 ; 212),
**caractérisé en ce que**
le mécanisme d'actionnement (112 ; 212) comporte un disque de verrouillage (125 ; 225a, 225b) disposé de façon mobile au niveau du support, et
le disque de verrouillage (125 ; 225a, 225b) possède un trou oblong (130 ; 230) comportant une première extrémité ouverte (131 ; 231) et une deuxième extrémité fermée (132 ; 232), l'entraîneur (120 ; 253) étant disposé dans la première position à la première extrémité (131 ; 231) du trou oblong (130 ; 230) et dans la position intermédiaire à la deuxième extrémité (132 ; 232) du trou oblong (130 ; 230).

2. Unité de verrouillage selon la revendication 1, dans laquelle une plaque de verrouillage (128 ; 228a, 228b) est fixée au support, et dans laquelle la plaque de verrouillage (128 ; 228a, 228b) comporte un perçage (139 ; 239) que traverse au moins partiellement l'entraîneur (120 ; 253).

3. Unité de verrouillage selon la revendication 1 ou 2, dans laquelle le disque de verrouillage (125 ; 225a, 225b) est monté sur le support de façon à pouvoir tourner autour d'un axe de disque de verrouillage (127 ; 227).

4. Unité de verrouillage selon l'une des revendications 1 à 3, dans laquelle l'élément de verrouillage (101) comporte un levier (123) monté à rotation, et dans laquelle l'entraîneur (120) est conformé en organe de préhension du levier (123).

5. Unité de verrouillage selon la revendication 4, dans laquelle un axe de rotation (110) du levier (123) est orienté, dans la deuxième position, sensiblement dans un prolongement de l'axe de disque de verrouillage (127).

6. Unité de verrouillage selon la revendication 4 ou 5, dans laquelle le disque de verrouillage (125) comporte un trou borgne (133) doté d'une première extrémité fermée (134) et d'une deuxième extrémité ouverte (135), et dans laquelle la deuxième extrémité (135) du trou borgne (133) s'ouvre dans la première extrémité (131) du trou oblong (130) du disque de verrouillage (125).

7. Unité de verrouillage selon l'une des revendications 1 à 3, dans laquelle l'élément de verrouillage (201) est conformé en coulisseau (250) qui est monté de façon à pouvoir se déplacer longitudinalement dans un logement (251) associé au premier volet et qui traverse dans la première position une portion de guidage (252) associé au deuxième volet.

8. Unité de verrouillage selon la revendication 7, dans laquelle l'entraîneur (253) est conformé en tige s'étendant latéralement depuis le coulisseau (250) et mobile dans un guide (254).

9. Unité de verrouillage selon la revendication 8, dans laquelle la tige (253) est disposée dans la deuxième position à une deuxième extrémité (256) du guide (254).

10. Unité de verrouillage selon l'une des revendications 1 à 9, dans laquelle la première extrémité (131 ; 231) du trou oblong (130 ; 230) présente une surface de guidage (136 ; 236) avec laquelle l'entraîneur (120 ; 253) coopère dans la première position.

11. Unité de verrouillage selon la revendication 10, dans laquelle la surface de guidage (136 ; 236) est conformée en rétrécissement par portions du trou oblong (130 ; 230).

12. Unité de verrouillage selon l'une des revendications 1 à 11, dans laquelle le support est conformé en carrosserie d'un véhicule automobile.

13. unité de verrouillage selon la revendication 12, dans laquelle le premier volet est conformé en hayon du véhicule automobile, et dans laquelle le hayon est monté sur la carrosserie de façon à pouvoir pivoter autour d'un axe de hayon.

14. Unité de verrouillage selon la revendication 13, dans laquelle le deuxième volet est conformé en capot de coffre du véhicule automobile, et dans laquelle le capot de coffre est monté sur le hayon de façon à pouvoir pivoter autour d'un axe de capot de coffre.
